# EUROPEAN PATENT APPLICATION

(11) **EP 3 106 274 A1**
(43) Date of publication of application: **21.12.2016**
(21) Application number: 16173004.9
(22) Date of filing: 03.06.2016
(51) Int. Cl.: B27J 5/00, B23D 45/10, B27M 1/00

(54) **CORK BASED PLANKS CUTTING MACHINE**

(30) Priority: 04.06.2015 PT 2015108528
(71) Applicant: Amorim Cork Research, Lda., 4535-186 Mozelos VFR Santa Narua da Feira (PT)
(72) Inventor: DA SILVA, LUIS FILIPE PEIXOTO MACHADO, 4535-193 MOZELOS VFR (PT); ALVES, ANDRÉ DE SOUSA, 4520-606 SÃO JOÃO DE VER (PT)
(74) Representative: Alves Moreira, Pedro

(57) **Abstract**

The present invention relates to a cutting machine (1) for cutting planks of cork material, to cut "strips" of cork material with sufficient thickness for the production of cork stoppers. The machine (1) has a frame (2) comprising a support surface (3); a set of at least two shafts (5) parallel to each other, the shafts (5) being arranged in the same plane that is parallel to a cutting plane and the shafts (5) being also arranged perpendicularly to a cutting direction (S); at least one cutting element (6) mounted on each shaft (5), the cutting elements (6) being parallel to each other and misaligned relative to one another in the cutting direction (S); a plank holding top device (7) which cooperates with a plank conveying and holding bottom device (4). The present invention has application in the cork industry.

## Description

### FIELD OF THE INVENTION

The present invention relates to a cutting machine for cutting planks of cork based material that operates to cut strips (also called "slabs") of cork based material with sufficient thickness for the production of cork stoppers. The present invention has application in the field of cork industry.

### BACKGROUND OF THE INVENTION

It is well known the use of cork in a variety of industrial applications and more particularly in the production of cork stoppers.

The main technique for production of natural cork stoppers has remained unchanged for centuries and allows the production of cork stoppers directly from natural cork.

Briefly, the cork is removed from the cork oak in large rough pieces of cork bark with an approximately rectangular shape, which are cut into smaller pieces called planks. These planks are boiled and thereafter cut into strips of width slightly greater than the length of the cork stopper to be manufactured. After that, the cork strips are punched in its longitudinal section or, in other words, punched in the thickness direction of the strip and along its length, in order to get cork cylinders that after several treatment processes are made into cork stoppers.

The devices and processes generally used in the art carry out manually or semi-automatically the cutting of cork planks into strips, involving a trained operator to make a good use of the cork strip. This operation of making cork strips from planks involves high safety risk for the operator, since it is a procedure which in most cases is not fully automated, involving the handling of cutting elements, which requires extra care and protection by the operator performing this task.

The productivity of the workstations that perform the cutting of cork planks is dependent on the experience and assessment degree of cork by the operator carrying out this work and on the plant unit where it operates.

Automation of the process of cutting cork planks into strips has been implanted in cork stopper manufacturing facilities, and several techniques and devices for semi-automated cutting have emerged, in order to increase the production of cork stoppers by optimizing the cutting process and also the good use of the cork plank material.

FR2576826A1 discloses a device for cutting cork planks into strips, wherein one or more cork planks are placed on a support surface, in which the planks are pressed by a presser roll and behind it there are cutting elements, such as circular saws parallel to each other and on a common shaft. The spacing between the cutting means is equal to a sufficient diameter to produce the cork stoppers. By moving the planks over the support surface in the same direction of the cork veins, the cork planks are cut into strips.

EP983830A2 describes a device for cutting cork planks into strips that comprises a table along which the cork planks are arranged for cutting. Said table supports at one end a shaft that rotates on an axis that forms a right angle with the cutting direction. The shaft comprises a plurality of circular blades parallel to each other and uniformly distributed along its length. This device also includes positioning elements comprising two hydraulic cylinders to push the cork planks against adjustable fastening means to exert pressure over the cork planks and to position them perpendicular to the cutting direction, as they move against the cutting elements. The cutting speed and precision of the device is low due to high shear stresses of the blade body. This leads to heat dissipation problems and consequent blade wear and cut inaccuracy.

ES2223285A1 discloses an automated machine for cutting cork planks into strips, comprising a cork plank feeding unit to feed a cutting unit that comprises a counter-blade for receiving the cork plank, and a cutting blade that is parallel to said counter-blade and slightly displaced from the plane thereof to allow cutting the cork strip with a predetermined thickness, and there are driving means for conveying the cork planks towards the cutting blade and for returning said cork plank after the cutting operation is performed, so as to repeat the cycle until the end of the cork plank. This machine allows the cutting of two strips in each cutting movement, which makes this process slow and does not allow the cutting of the entire plank in a single movement.

The "Semi-automated cork striping Equipment ERA-200" sold by Azevedos Industria company is well known, which has a cork plank cutting system with displacement movement of the blade. The cork plank is fixed and a single rotating blade moves towards the cork plank, making one cut with each movement. It has a strip fixing system and a linear convey to drive out the cut strips. Also in this case, only one strip is cut per movement of the blade.

Although the previously cited documents disclose semiautomatic devices for cutting cork planks into strips and thus increasing safety of operation and operator, they still shown low productivity.

It is noted that the conventional arrangement of the cutting blades parallel to each other in a single shaft ("inline blades"), involves high cutting strain, given the nature of the cork material and consequent resistance to cutting, which increases material wear and cutting time.

Usually in this type of devices, circular saws are used to overcome said cuttings forces. However, the cutting of cork planks with circular saws causes a huge waste of cork due to the release of cork chips by these cutting elements.

Accordingly, there is a need in the art for a device that, in a simple way, increases the productivity of the process, increasing the number of strips produced per cutting time, and also increasing safety of the operator, as well as reducing the waste of cork material.

### SUMMARY OF THE INVENTION

The present invention relates to a cork based planks cutting machine having a frame comprising:
a support surface defining a cutting plane and a cutting direction, which support surface is provided with a plank conveying and holding bottom device;
a set of at least two shafts parallel to each other, the shafts being arranged in the same plane, which plane is parallel to the cutting plane and the shafts being also perpendicularly to said cutting direction, and
at least one cutting element mounted on each of the, at least two, shafts, the cutting elements being parallel to each other;
characterised by further comprising a plank conveying and holding top device that cooperates with the plank conveying and holding bottom device, and the cutting elements are all misaligned relative to one another in the cutting direction.

In one embodiment, said cutting elements define along the cutting direction an inverted V configuration.

In another embodiment, the cutting elements define along the cutting direction a V configuration.

In one aspect of the invention, said support surface is vertically movable for adjusting the thickness of a cutting plank.

In another aspect, said plank conveying and holding bottom device comprises conveyor chains, in which these are driven by a motor for conveying a plank and by pressers for holding said plank.

In yet another aspect, the plank conveying and holding top device comprises conveyor chains, in which these are driven by a motor for conveying a plank and by pressers for holding said plank.

In another embodiment, said parallel shafts are half shafts.

In yet another embodiment, the cutting elements are rotating blades.

Preferably, the cutting elements are arranged between the conveyor chains of the conveying and holding top and bottom devices.

In one preferred embodiment of the invention, the cutting machine comprises:
rotating blades mounted in half shafts, said rotating blades defining an inverted V configuration along the cutting direction;
a vertically movable support surface having a set of conveyor chains; and
a plank conveying and holding top device comprising a set of conveyor chains vertically driven by pressers for holding the plank;
wherein said rotating blades are arranged between said conveyor chains of the support surface and the plank conveying and holding top device.

### BRIEF DESCRIPTION OF THE DRAWINGS

The invention is next described with reference to the attached drawings, wherein:
Fig. 1 is a schematic perspective view of a machine according to the invention.
Fig. 2 is a top view of the machine of Fig. 1.
Fig. 3 is a side view of the machine of Fig. 1.
Fig. 4 schematically shows to a plank conveying and holding top device of the machine shown in Fig. 1.
Fig. 5 is a front view of the machine of Fig. 1.
Fig. 6 is another embodiment of the machine of the present invention showing half shafts.
Fig. 7 is a front view of the machine of Fig. 6.
Fig. 8 illustrates an inverted V configuration of the rotating blades.
Fig. 9 illustrates a V configuration of the rotating blades.

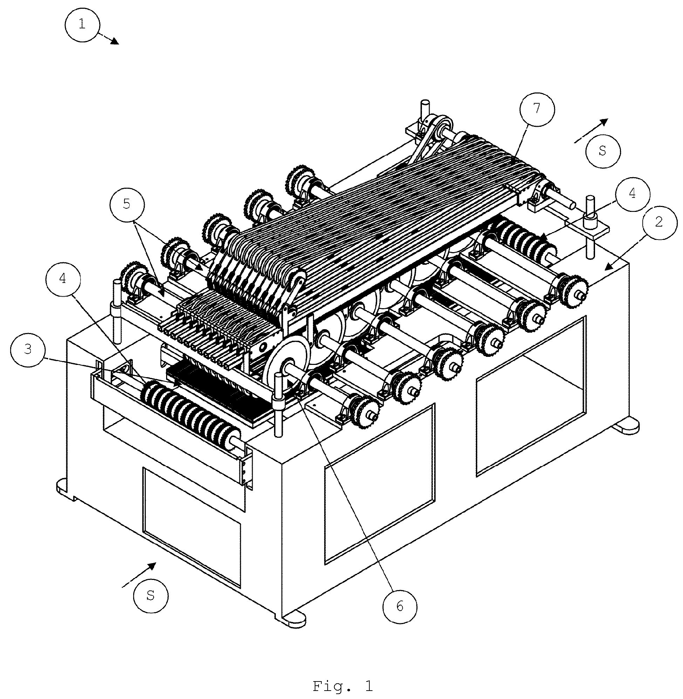

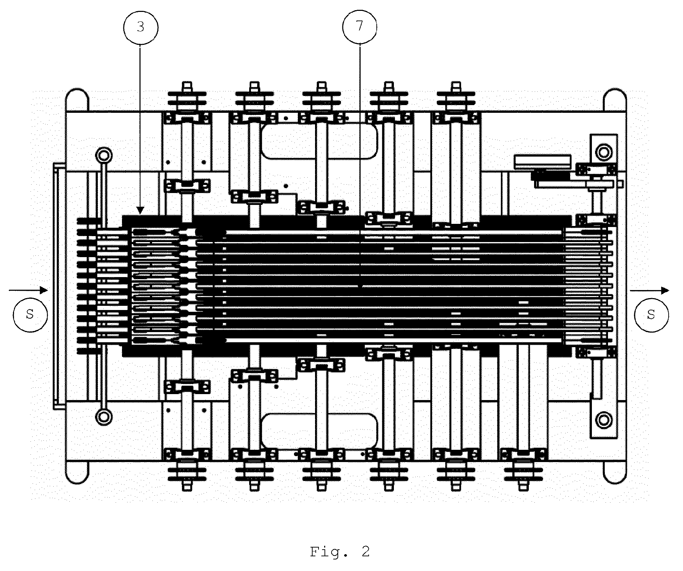

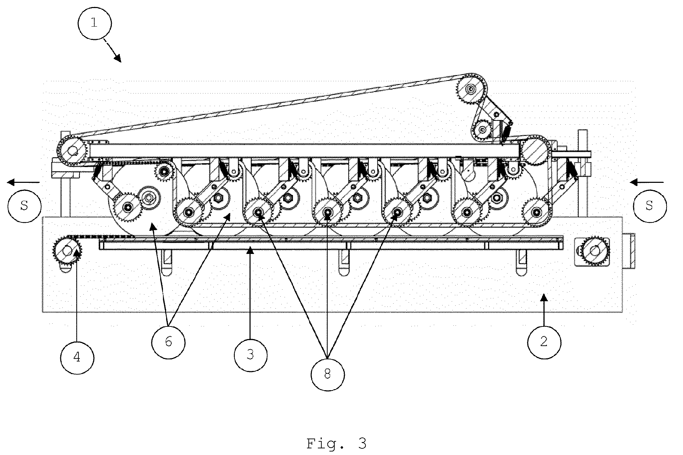

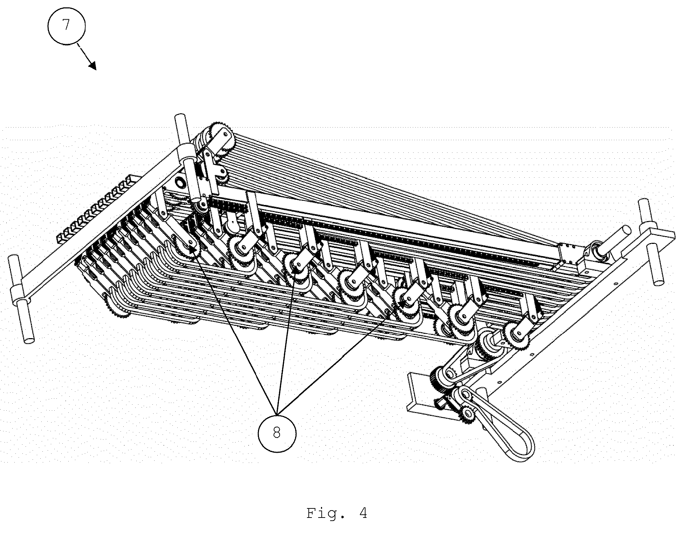

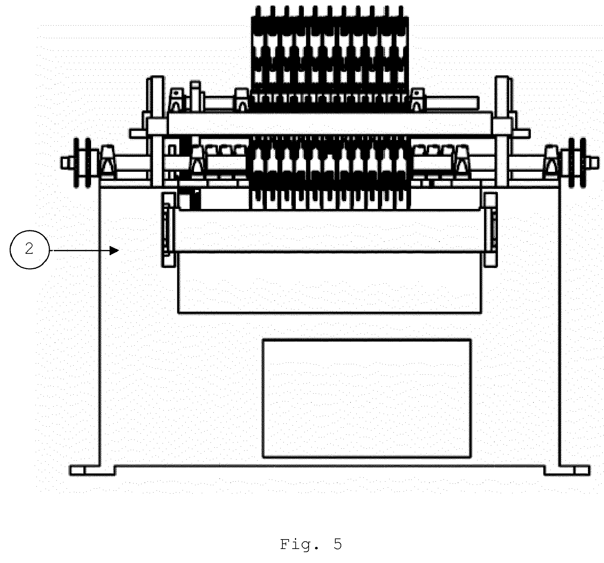

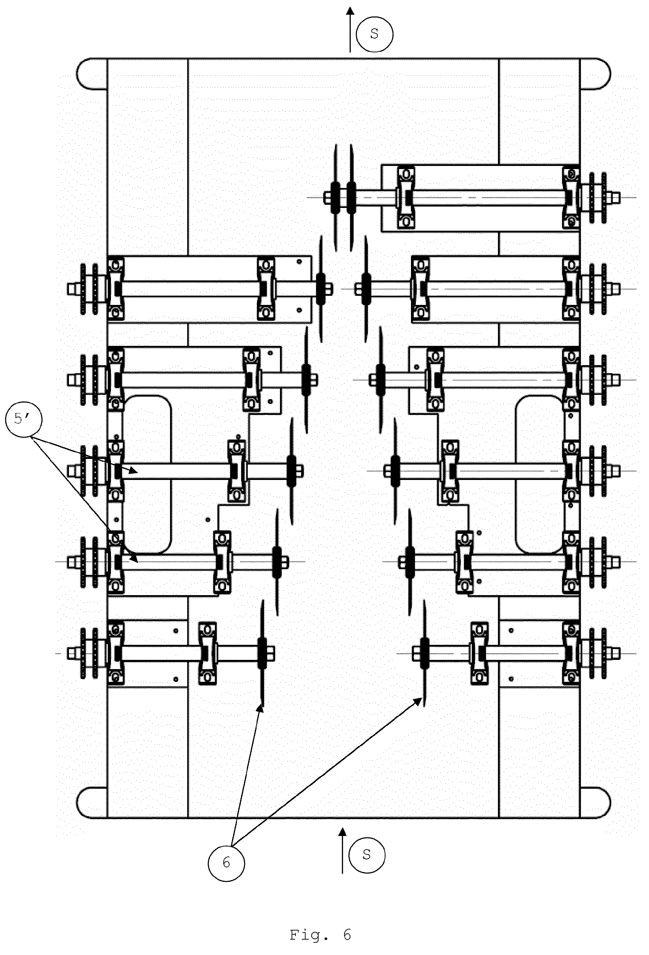

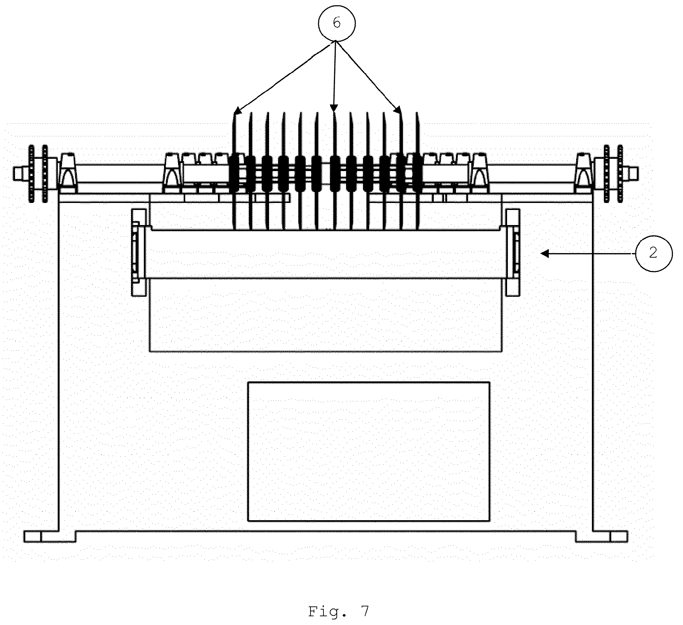

The invention is next described in detail with reference to Figs. 1 to 9.

### DETAILED DESCRIPTION OF THE INVENTION

The present invention relates to a cork based planks cutting machine (1) that operates to cut strips of cork based material for subsequent production of cork stoppers. This invention allows increasing the productivity in the field of cutting planks of cork material, providing a reduction of the cutting times, increasing the number of cut strips and reducing the waste of cork material. Moreover, the present invention is a considerable advance with regard the operator safety.

With the present invention an operator selects substantially flat cork planks (about 75% of total amount made available to the operator) to be automatically cut in the device of the present invention. The remaining cork planks that show deformations or irregular shapes are cut by conventional prior art devices. Thus, it is possible to combine the device of the present invention with any conventional device, both operated by a single operator, thus solving the productivity problems traditionally associated with only manual or semi-automatic processes mentioned above.

The term "planks" relates to planks of cork based material having an approximately rectangular shape, although they may have other geometric shapes.

The terms "strips" or "slabs" relates to cork pieces with a parallelepiped shape, preferably rectangular parallelepiped, resulting from the cutting plank.

The term "back" relates to the outer side of a cork plank, that is to say, the side that is visible before a plank is stripped from the tree. This side is the darkest and roughest side of a cork plank.

The term "belly" relates to the opposing side of the "back" side, that is to say, the side that is visible only after the plank is stripped from the tree. The belly side is lighter and softer than the "back" side.

The term "manual" or variations thereof refers to any tasks performed by a human operator without the use of any automated, mechanical, electrical or electronic devices, or the like.

The term "semi-automatic" refers to any task performed by automated, mechanical, electrical or electronic devices, or the like, but it requires human intervention for its implementation.

The term "automatic" refers to any task performed solely by automated, mechanical, electrical or electronic devices, or the like, without any human intervention.

The term "cutting direction" means a reference line guided from the entry point of the cork plank in the cutting machine to the leaving point of the plank after cutting it into strips or slabs. In other words, the cutting direction relates to the moving orientation of the cork plank relative to the its support surface, and said movement drives the cutting plank to the cutting elements.

The term "misaligned cutting elements" means that two or more of said cutting elements do not coexist on the same reference line parallel to the cutting direction. Thus, in the context of the invention there is only one cutting element per reference line.

The term "presser" relates to a mechanical element adapted to cooperate with a conveyor chain, in order to allow movement of the chain and simultaneously cause a vertical force on the chain to push said chain against a cork plank. This feature allows holding the plank by the chain, therefore preventing relative movements of the plank in relation to the chain. This element can be configured, for example, as a system consisting of a base with a fixed support, which binds to a movable arm pivotably. At one end of the movable arm there is a gear wheel which can be adjusted to the links of a chain, to allow free movement thereof. The other end of the arm is provided with a spring which binds to said support, the connection being hinged between the movable arm and the support arranged between said ends of the movable arm. When a cork plank moves in the cutting direction, said spring allows that the gear wheel absorbs the irregularities of the cork plank surface against which the chain is arranged, but keeping the gripping force caused by the gear wheel on the chain and consequently on the cork plank against which the chain is arranged. In another example, the presser may be a system of pistons and/or springs. The skilled artisan can obviously design pressers suitable for the intended function, different from those exemplified.

The term "cork material" or simply "cork" relates to natural cork, colmated natural cork, agglomerated cork, micro-agglomerated cork or the like, and combinations thereof.

The term "cork based material" in the context of the present invention relates to cork material, as defined above, or cork material combined with another material, such as, for example, a composite of polymeric material and cork material.

The term "polymeric material" relates to a material that according to its mechanical characteristics can be divided in thermoplastics, thermosets and elastomers. The thermoplastic include the known plastics, very available in the market, that can be melted several times and, in some cases, can be dissolved in several solvents, therefore being recyclable materials. The thermosets are rigid and fragile, being very stable to temperature changes, although heating the finished thermosetting polymer promotes decomposition of the material before melting, making difficult for recycling. With respect to elastomers, these materials have high elasticity, not being as rigid as the thermosets and can not be melted, a situation which reduces the recycling possibilities.

In the context of the present application, the use of the term "and/or" means that both conditions are verified or just one of them. For example, the term "bottom and/or top device" means "bottom and top device, or bottom device, or top device".

In the context of the present description, the term "comprising" must be understood as "including, among others". As such, said term should not be interpreted as "consisting only of".

The cutting machine (1) of the present invention is following described in detail.

Thus, making reference to the attached Figures, the cutting machine (1) for cutting planks of cork based material of the present invention has a frame (2) that comprises:
a support surface (3) defining a cutting plane (P) and a cutting direction (S), which support surface (3) is provided with a plank conveying and holding bottom device (4);
a set of at least two shafts (5) parallel to each other, the shafts (5) being arranged in the same plane, which plane is parallel to the cutting plane (P) and the shafts (5) being arranged perpendicularly to said cutting direction (S), and
at least one cutting element (6) mounted on each, at least two shafts (5), the cutting elements (6) being parallel to each other, and
a plank conveying and holding top device (7), that cooperates with the plank conveying and holding bottom device (4), the cutting elements (6) being all misaligned relative to one another in the cutting direction (S).

Surprisingly, it was found that the misaligned arrangement of the cutting elements (6) provides higher cutting speeds, therefore obtaining higher cutting yields and causing less wear on the cutting elements (6).

In fact, it was found that this misaligned arrangement of the cutting elements (6) significantly reduced the friction involved in the cutting process, allowing to reduce the tensile force exerted in the plank by the plank conveying and holding bottom (4) and top devices (7), compared to prior art systems.

Said support surface (3) receives the planks of cork based material to cut that are therein placed by an operator or by means of a suitable automatic device which can be attached to the cutting machine (1).

Preferably, the planks of cork based material are placed on the support surface (3) of the cutting machine (1), so that the cork veins are substantially perpendicular to the cutting direction (S), with the plank belly in contact with the support surface (3), on a plane immediately above of the cutting surface plane, and with the plank back facing upwards, having as reference the normal operating position of the machine of the invention shown in Fig. 1.

Obviously, the planks of cork based material may be positioned with the cork veins in any orientation relative to the cutting direction (S) and the support surface (3) of the cutting machine (1) of the present invention.

The support surface (3) is provided with a plank conveying and holding bottom device (4), which is intended to drive the plank of cork based material in the cutting direction (S) along the support surface (3).

In one embodiment, the support surface (3) of the here described cutting machine (1) is provided with an adjustment device that allows its vertical movement, so as to adjust the distance required for the cutting plank to be inserted between the plank conveying and holding bottom (4) and top devices (7) for conveying and holding the plank.

A plank conveying and holding top device (7), arranged above the plank conveying and holding bottom device (4), cooperates with the latter, in order to better hold and assist the conveying of the plank, along the support surface (3). In this way, relative movements of the plank relative to the support surface (3) that are not the intended movements in the cutting direction (S) can be prevented. This feature improves the cutting accuracy.

Said shafts (5) are design to support the cutting elements (6). In the context of the present invention, the shafts (5) comprise:
- elements supported at two points of the machine frame, in this case being herein referred as complete shafts (5) ;
- elements that may be supported at only one point of the frame, in this case being herein referred as half shafts (5'); and
- combinations of complete shafts (5) and half shafts (5').

The advantage of the half shafts (5') is that they allow easier access to the cutting elements (6) therein mounted, for maintenance and/or replacement of the latter.

The frame (2) of the machine can comprise combined arrangements of complete shafts (5) and half shafts (5'), as well as arrangements of complete shafts (5) only or half shafts (5') only. Said shafts (5) are arranged parallel to each other and in a plane parallel to the cutting plane (P).

In one embodiment of the invention, the cutting elements (6) are mounted in pairs on each complete shafts (5) or each half shafts (5'), the axial distance between the cutting elements (6) of the pair being equal or greater than the length of the stopper to be obtained.

The axial distance between a pair of cutting elements (6) and another pair of cutting elements (6) immediately after (in the cutting direction (S)) can be equal or greater than the length of the stopper to be obtained.

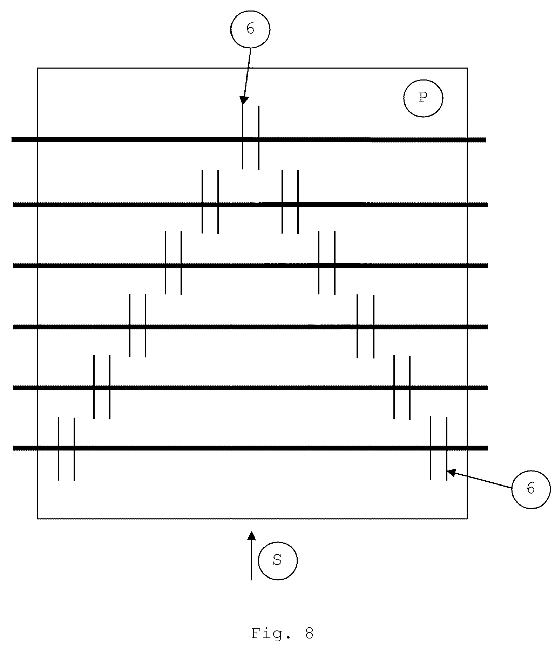

In one preferred embodiment, said cutting elements (6) show along the cutting direction (S), an inverted V configuration as shown in Fig. 8.

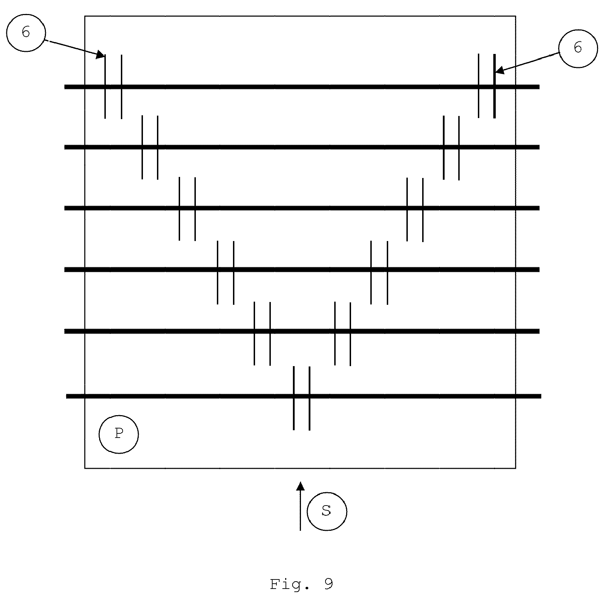

In another embodiment, the cutting elements (6) can be positioned as to show along the cutting direction (S), a V configuration as shown in Fig. 9.

The misaligned configuration of the cutting elements (6) along the cutting direction (S), defines different cut levels according with the number of shafts (5) present, and each shaft (5) configures a cut level. In this way, the cutting process of the plank does not all occur in the same cut level, as was generally the case in the prior art processes. In fact, the cut of the strips is happening along different levels, as the plank moves in the cutting direction. Fig. 8 and 9 illustrate embodiments which differ in the configuration defined by the cutting elements (6), but that have an equal number of cut levels, in this case six cut levels.

Although this solution has the advantages set out above, the fact that the cutting process is performed in different levels causes slight deviations of the plank and even the strips which are being defined along the cutting direction (S), which requires a process for holding and conveying that includes not only holding the plank as a whole but also individually each strip to be cut.

In fact, for example, with the "inverted V" configuration of the cutting elements (6) of Fig. 8, as the plank moves in the cutting direction (S), strips coexist that are already totally cut and strips that are still being cut. To ensure accuracy and uniformity of the cuts across the plank, the plank conveying and holding bottom (4) and/or top device (7) comprise, in a preferred embodiment, conveyor chains, driven by a motor, for conveying the plank and driven by pressers (8) which serve for holding the plank and strips. The pressers (8) act on chains, thereby allowing them to adjust to surface irregularities inherent to cork planks.

In a most preferred embodiment, the plank conveying and holding bottom (4) and top devices (7) comprise conveyor chains driven by a motor, for conveying the plank and pressers (8) for holding the plank.

In a particular arrangement common to both previous embodiments, the cutting elements (6) mounted in the shafts (5) are located between said top and bottom conveyor chains, so that after driving said cutting elements (6), they do not contact with the conveyor chains of the conveying and holding top (7) and bottom devices (4), enabling the simultaneous operation of all these components.

Preferably, the cutting elements (6) are rotating blades. However, any type of cutting elements (6) can be mounted in the shafts (5) such as, for example, saws, knives, lasers and any combination thereof, and the like.

It is further preferred that the rotating blades (6) are devoided of teeth, simply having a sharp edge. It should be noted that this solution was not possible in the prior art machines, as by using only cutting elements of the rotating saw type was possible to overcome the friction involved in such cutting machines.

Consequently, this solution leads to saving cork plank material, since it greatly limits the amount of cork chips generated compared to those generated by the use of saw type blades.

In one preferred embodiment of the invention, the cutting machine (1) comprises:
rotating blades (6) mounted in half shafts (5'), said rotating blades (6) defining an inverted V configuration along the cutting direction (S);
a vertically movable support surface (3) having a set of conveyor chains; and
a plank conveying and holding top device (7) comprising a set of conveyor chains which movement is driven by a motor and in which the vertical drive for holding a cork plank is carried out by pressers (8);
a plank conveying and holding bottom device (4) which movement is driven by a motor;
wherein said rotating blades (6) are arranged between the conveyor chains of the plank conveying and holding bottom (4) and top devices (7).

The foregoing description should be understood as exemplary and non-limiting of the scope of the present invention, which is defined by the attached claims.

## Claims

1. Cork based planks cutting machine (1) having a frame (2) comprising:
a support surface (3) defining a cutting plane (P) and a cutting direction (S), which support surface (3) is provided with a plank conveying and holding bottom device (4);
a set of at least two shafts (5) parallel to each other, the shafts (5) being arranged in the same plane, which plane is parallel to the cutting plane (P) and the shafts (5) being arranged perpendicularly to said cutting direction (S), and
at least one cutting element (6) mounted on each of the, at least two, shafts (5), the cutting elements (6) being parallel to each other;
**characterised by** further comprising a plank conveying and holding top device (7), that cooperates with the plank conveying and holding bottom device (4), and the cutting elements (6) being all misaligned relative to one another in the cutting direction (S).

2. Cutting machine (1) according to claim 1, wherein the cutting elements (6) define along the cutting direction (S) an inverted V configuration.

3. Cutting machine (1) according to claim 1, wherein the cutting elements (6) define along the cutting direction (S) a V configuration.

4. Cutting machine (1) according to any one of claims 1 to 3, wherein the support surface (3) is vertically movable for adjusting the thickness of a cutting plank.

5. Cutting machine (1) according to any one of claims 1 to 4, wherein the plank conveying and holding bottom device (4) comprises conveyor chains.

6. Cutting machine (1) according to any one of claims 1 to 4, wherein the plank conveying and holding top device (7) comprises conveyor chains.

7. Cutting machine (1) according to claim 5, wherein the conveyor chains of the conveying and holding bottom device (4) are driven by a motor for conveying a plank and by pressers (8) for holding said plank.

8. Cutting machine (1) according to claim 6, wherein the conveyor chains of the conveying and holding top device (7) are driven by a motor for conveying a plank and by pressers (8) for holding the plank.

9. Cutting machine (1) according to any one of claims 1 to 8, wherein said parallel shafts (5) are half shafts (5').

10. Cutting machine (1) according to any one of claims 1 to 9, wherein the cutting elements (6) are rotating blades.

11. Cutting machine (1) according to any one of claims 5 to 10, wherein the cutting elements (6) are arranged between the conveyor chains of the plank conveying and holding bottom (4) and top (7) devices.

12. Cutting machine (1) according to claim 1, comprising:
rotating blades mounted in half shafts (5'), said rotating blades (6) defining an inverted V configuration along the cutting direction (S);
a vertically movable support surface (3) having a set of conveyor chains; and
a plank conveying and holding top device (7) comprising a set of conveyor chains vertically driven by pressers (8) for holding a plank;
wherein said rotating blades (6) are arranged between said conveyor chains of the support surface (3) and the plank conveying and holding top device (7).
